# EUROPÄISCHE PATENTANMELDUNG

(11) **EP 4 298 898 A1**
(43) Veröffentlichungstag der Anmeldung: **03.01.2024**
(21) Anmeldenummer: 23180554.0
(22) Anmeldetag: 21.06.2023
(51) Int. Cl.: A01K 1/00

(54) **LUFTVERTEILER FÜR EIN STALLGEBÄUDE, STALLGEBÄUDE UND VERFAHREN ZUM VERTEILEN VON LUFT IN EINEM STALLGEBÄUDE**

(30) Priorität: 30.06.2022 LU 502422
(71) Anmelder: Big Dutchman International GmbH, 49377 Vechta (DE)
(72) Erfinder: Rosemeyer, Bernd, 49624 Löningen (DE); von Hammel, Martin, 49393 Lohne (DE); Sauer, Christian, 49439 Steinfeld (DE)
(74) Vertreter: Eisenführ Speiser

(57) **Zusammenfassung**

Die Erfindung betrifft einen Luftverteiler (100) für ein Stallgebäude (1000), ein Stallgebäude und ein Verfahren (200) zum Verteilen von Luft in einem Stallgebäude. Der Luftverteiler weist einen Luftkanal (101), einen Austrittsspalt (106) für Luft und eine Prallplatte (110) auf. Ferner weist der Luftverteiler zwei Luftleiteinrichtungen (120) auf, die angeordnet sind, das Ausströmen von Luft auf zwei Hauptströmungsrichtungen (HR) zu beschränken.

## Beschreibung

Die Erfindung betrifft einen Luftverteiler für ein Stallgebäude, insbesondere für ein Stallgebäude zur Nutztierhaltung, ein Stallgebäude und ein Verfahren zum Verteilen von Luft in einem Stallgebäude.

Luftverteiler dienen dazu, die Luft in Stallgebäuden umzuwälzen und/oder Frischluft bzw. Außenluft in Stallgebäuden zu verteilen. Insbesondere in der Nutztierhaltung ist eine effiziente und effektive Luftverteilung für das Tierwohl und das Emissionsmanagement wichtig. Existierende Luftverteiler sind beschrieben in DE202006015130U1, DE202011001768U1, DK168774B1 oder GB1216703A.

Existierende Luftverteiler verteilen die Luft jedoch oft unzureichend oder mit geringer Effizienz. Ferner sind weitere Verbesserungen im Hinblick auf die Luftverteilung wünschenswert.

Es ist daher eine Aufgabe der vorliegenden Erfindung, einen Luftverteiler für ein Stallgebäude, ein Stallgebäude und ein Verfahren zum Verteilen von Luft in einem Stallgebäude bereitzustellen, welche die genannten Nachteile vermindern oder beseitigen. Ferner ist es eine Aufgabe der vorliegenden Erfindung, einen verbesserten Luftverteiler für ein Stallgebäude, ein verbessertes Stallgebäude und ein verbessertes Verfahren zum Verteilen von Luft in einem Stallgebäude bereitzustellen. Insbesondere ist es eine Aufgabe der vorliegenden Erfindung, einen Luftverteiler für ein Stallgebäude, ein Stallgebäude und ein Verfahren zum Verteilen von Luft in einem Stallgebäude bereitzustellen, welche eine bessere, insbesondere effizientere und effektivere Luftverteilung in einem Stallgebäude für die Nutztierhaltung ermöglichen.

Diese Aufgabe wird erfindungsgemäß gelöst durch einen Luftverteiler für ein Stallgebäude, insbesondere für ein Stallgebäude zur Nutztierhaltung, mit einem Luftkanal, einem Austrittsspalt für Luft und einer Prallplatte, gekennzeichnet durch zwei Luftleiteinrichtungen, die angeordnet sind, das Ausströmen von Luft auf zwei Hauptströmungsrichtungen zu beschränken. Vorzugsweise führt der Luftverteiler die Luft durch einen senkrechten Luftkanal auf eine im Betriebszustand vorzugsweise waagerechte Prallplatte, welche die Luft in eine vorzugsweise waagerechte Richtung umlenkt und durch einen Austrittsspalt vorzugsweise in einem Winkel von 360 Grad austreten lässt. Der Luftverteiler weist ferner zwei Luftleiteinrichtungen auf, die angeordnet sind, die austretende Luft auf zwei Hauptströmungsrichtungen zu beschränken.

Der Luftkanal ist im Betriebszustand vorzugsweise senkrecht angeordnet und/oder weist insbesondere eine Längsachse auf, die vorzugsweise im Betriebszustand im Wesentlichen vertikal ausgerichtet ist. Der Luftkanal kann insbesondere zum Ansaugen von Außenluft dienen, insbesondere durch eine Zuluftöffnung. Die Außenluft kann auch als Frischluft bezeichnet werden. Der Luftverteiler und/oder der Luftkanal kann auch einen Wärmetauscher aufweisen, um (insbesondere in der kalten Jahreszeit) angesaugte Außenluft anzuwärmen.

Der Luftkanal kann optional einen Umluftzufuhrspalt und/oder eine Umluftöffnung, einen Ventilator und/oder eine Mischkammer zum Mischen von Außenluft und/oder Umluft zu Mischluft aufweisen.

Der Luftverteiler kann ferner einen Umluftzufuhrspalt und/oder eine Umluftöffnung zum Ansaugen von Umluft aufweisen. Umluft ist insbesondere Luft aus dem Inneren des Stallgebäudes. Insbesondere kann die, meist warme, Umluft genutzt werden die, meist kalte, Außenluft anzuwärmen.

Der Luftkanal kann einen Ventilator enthalten, um die Luft in der gewünschten Richtung strömen zu lassen. Die Luft kann auch durch andere Verfahren bewegt werden, zum Beispiel durch Herstellen eines Unterdrucks im Stallgebäude.

Der Ventilator des Luftverteilers ist vorzugsweise ausgebildet, Außenluft durch den Luftkanal anzusaugen und/oder Umluft durch den Umluftzufuhrspalt und/oder eine Umluftöffnung anzusaugen und/oder Luft aus dem Austrittsspalt ausströmen zu lassen. Der Ventilator sorgt somit vorzugsweise für einen Luftstrom durch den Luftverteiler, und zwar vom Luftkanal, insbesondere dessen Luftöffnung, und/oder vom Umluftzufuhrspalt und/oder der Umluftöffnung zum Austrittsspalt.

Ferner ist eine Prallplatte vorgesehen, die vorzugsweise zur Umlenkung der Luft dient und/oder vorzugsweise den Austrittsspalt begrenzt. Die Prallplatte lenkt vorzugsweise den Luftstrom von einer im Betriebszustand vorzugsweise im Wesentlichen vertikalen Durchströmungsrichtung in eine vorzugsweise im Wesentlichen horizontalen Ausströmungsrichtung um. Eine im Wesentlichen horizontale Ausströmungsrichtung kann zu einer horizontalen Ebene einen Bereich von mindestens +/- 3° und/oder maximal +/- 65° beinhalten, d.h. aus dem Austrittsspalt ausströmende Luft kann auch um vorzugsweise 3 bis 65° von der Horizontalen nach oben und/oder nach unten strömen.

Der Luftverteiler weist ferner zwei Luftleiteinrichtungen auf, die vorzugsweise im Austrittsspalt und/oder auf und/oder an der Prallplatte angeordnet sind. Die zwei Luftleiteinrichtungen dienen dazu, das Ausströmen von Luft, insbesondere aus dem Austrittsspalt, auf zwei Hauptströmungsrichtungen zu beschränken.

Die hier beschriebene Lösung beruht unter anderem auf der Erkenntnis, dass anders als ein Ausströmen von Luft im Wesentlichen über den gesamten Umfang des Luftverteilers, wie es im Stand der Technik vorgesehen ist, eine Beschränkung des Ausströmens auf zwei Hauptströmungsrichtungen unerwarteter Weise verschiedene Vorteile hinsichtlich der Effizienz und Effektivität der Luftverteilung im Stallgebäude mit sich bringt.

Existierende Lösungen strömen die Luft im Wesentlichen über den gesamten Umfang bzw. über im Wesentlichen 360° aus. Leitelemente dienen teilweise dazu, eine besonders gleichmäßige Luftverteilung zu erzielen oder auch die Luftverteilung auf Stallgebäude mit im Wesentlichen rechteckigem Grundriss zu optimieren. Eine Beschränkung auf zwei Hauptströmungsrichtungen ist hingegen nicht vorgesehen.

Eine der Erkenntnisse der hier beschriebenen Lösung ist es, dass sich bei einem Ausströmen von Luft im Wesentlichen über den gesamten Umfang des Luftverteilers, wie es im Stand der Technik vorgesehen ist, Wirbelströme und/oder eine sogenannte Luftwalze bilden können, die sich nachteilig auf die Strömungsausprägung auswirken. Dadurch können die Reichweite und/oder die Strömungsgeschwindigkeit negativ beeinflusst werden. Existierende Lösungen für Luftverteiler führen die Luft in der Regel von oben in den Stall auf einen Prallteller, der den Luftstrom waagerecht in alle Richtungen lenkt, und blasen die Luft nahe an der Stalldecke waagerecht in einem Winkel von 360°, d.h. entlang des Umfangs des Luftverteilers in alle Richtungen, in den Stall aus. Die hier vorliegende Lösung beruht u.a. auf der Erkenntnis, dass sich dadurch zwischen der eingeblasenen Luft und der Stalldecke eine Luftwalze rund um den Luftverteiler ausbildet, die die eingeblasene Luft nach oben an die Decke zieht und dem Luftstrom viel Energie entzieht. Geschwindigkeit und Reichweite des Luftstroms werden verringert und dadurch die Wirksamkeit des Luftverteilers beeinträchtigt.

Die hier vorgeschlagene Lösung sieht hingegen vor, den Luftstrom durch die zwei Luftleiteinrichtungen nur in zwei Hauptströmungsrichtungen zu lenken, dadurch die Entstehung von Wirbelströmen und/oder einer Luftwalze zu verhindern oder zu verringern und somit Geschwindigkeit und Reichweite des Luftstroms zu erhöhen.

Ein weiterer Vorteil der hier beschriebenen Lösung ist es, dass überwiegend Umluft, die schon einmal einen Großteil des Stallgebäudes passiert hat, erneut von der Luftströmung erfasst wird, wodurch sich eine besonders gute Durchmischung der Luft im Stallgebäude ergibt.

Die hier beschriebene Lösung mit einer erhöhten Strömungsgeschwindigkeit und Luftdurchmischung hat den weiteren Vorteil, dass im Nutztieraufenthaltsbereich eine bessere Abführung von Emissionsgasen der Nutztiere und deren Exkremente erzielt werden kann, was sich sowohl auf das Tierwohl als auch das Emissionsmanagement positiv auswirkt.

Verweise in dieser Beschreibung auf die zwei Hauptströmungsrichtungen und/oder die zwei Luftleiteinrichtungen, insbesondere auf jeder der zwei Hauptströmungsrichtungen und/oder jede der zwei Luftleiteinrichtungen bedeuten insbesondere, dass die jeweils beschriebenen Merkmale für beide Hauptströmungsrichtungen bzw. beide Luftleiteinrichtungen gelten können. Es ist jedoch auch möglich, dass die beiden Hauptströmungsrichtungen bzw. die beiden Luftleiteinrichtungen jeweils unterschiedlich ausgebildet sind und ein jeweils beschriebenes Merkmal nur für eine der beiden Hauptströmungsrichtungen bzw. eine der beiden Luftleiteinrichtungen gilt. Entsprechendes gilt für die später erwähnten zwei Blockagerichtungen.

Gemäß einer bevorzugten Ausführungsform ist vorgesehen, dass jede der zwei Hauptströmungsrichtungen im Betriebszustand im Wesentlichen horizontal ausgerichtet ist. Eine im Wesentlichen horizontale Hauptströmungsrichtung kann zu einer horizontalen Ebene einen Bereich von mindestens +/- 3° und/oder maximal +/- 65° beinhalten, d.h. aus dem Austrittsspalt ausströmende Luft kann auch um vorzugsweise 3 bis 65° von der Horizontalen nach oben und/oder nach unten strömen.

Eine weitere bevorzugte Fortbildung zeichnet sich dadurch aus, dass die zwei Hauptströmungsrichtungen einander gegenüberliegend ausgerichtet sind. Vorzugsweise sind also die zwei Hauptströmungsrichtungen zueinander entgegengesetzt. Hierdurch ergibt sich ein besonders vorteilhaftes Strömungsverhalten, durch welches die oben genannten Vorteile besonders stark in Erscheinung treten.

In einer bevorzugten Ausführungsform ist ferner vorgesehen, dass jede der zwei Hauptströmungsrichtungen in einer Ebene orthogonal zu einer Längsachse des Luftkanals einen horizontalen Strömungswinkel von mindestens 45° und/oder maximal 135° aufweist. Diese horizontalen Strömungswinkelbereiche bewirken ein besonders vorteilhaftes Strömungsverhalten, durch welches die oben genannten Vorteile besonders stark in Erscheinung treten.

Eine weitere bevorzugte Fortbildung ist gekennzeichnet durch zwei Blockagerichtungen, wobei die zwei Luftleiteinrichtungen das Ausströmen von Luft in den beiden Blockagerichtungen blockieren. Die Blockagerichtungen sind vorzugsweise Strömungsrichtungen, in die im Wesentlichen keine Luft aus dem Luftverteiler ausströmt, was insbesondere durch die zwei Luftleiteinrichtungen verhindert wird. Diese Blockagerichtungen tragen vorzugsweise zur Trennung der beiden Hauptströmungsrichtungen voneinander bei und verstärken somit die eingangs genannten Vorteile.

Ferner ist vorzugsweise vorgesehen, dass die zwei Blockagerichtungen einander gegenüberliegend ausgerichtet sind. Vorzugsweise sind also die zwei Blockagerichtungen zueinander entgegengesetzt. Hierdurch ergibt sich ein besonders vorteilhaftes Strömungsverhalten, durch welches die oben genannten Vorteile besonders stark in Erscheinung treten.

Es ist ferner bevorzugt, dass jede der zwei Blockagerichtungen in einer Ebene orthogonal zu einer Längsachse des Luftkanals einen Blockagewinkel von mindestens 45° und/oder maximal 135° aufweist. Diese Blockagewinkelbereiche bewirken ein besonders vorteilhaftes Strömungsverhalten, durch welches die oben genannten Vorteile besonders stark in Erscheinung treten.

Gemäß einer bevorzugten Ausführungsform ist vorgesehen, dass in einer Ebene orthogonal zu einer Längsachse des Luftkanals die Hauptströmungsrichtungen und Blockagerichtungen abwechselnd angeordnet sind. Dies bewirkt eine besonders gute Trennung der beiden Hauptströmungsrichtungen voneinander und führt ebenfalls zu einem besonders vorteilhaften Strömungsverhalten, durch welches die oben genannten Vorteile besonders stark in Erscheinung treten.

In einer weiteren bevorzugten Ausführungsform ist vorgesehen, dass jede der zwei Luftleiteinrichtungen als V-förmiges Leitelement ausgebildet ist. Jede der zwei Luftleiteinrichtungen kann vorzugsweise zwei im Wesentlichen plattenförmigen Leitelemente aufweisen, die vorzugsweise eine Haupterstreckung in einer im Betriebszustand vertikalen Ebene aufweisen, um insbesondere ein Ausströmen in seitlicher Richtung zu begrenzen. Jede der zwei Luftleiteinrichtungen kann ferner vorzugsweise Luftrichtfinnen aufweisen, welche sich vorzugsweise an die im Wesentlichen plattenförmigen Leitelemente anschließen und vorzugsweise im Betriebszustand im Wesentlichen horizontal ausgerichtet sind. Diese Ausgestaltungen sind besonders einfach und kostengünstig bei gleichzeitig hoher Effektivität umzusetzen.

Es ist ferner bevorzugt, dass jede der zwei Luftleiteinrichtungen im Austrittsspalt angeordnet ist. Dabei ist insbesondere bevorzugt, dass jede der zwei Luftleiteinrichtungen auf der Prallplatte angeordnet ist. Jede der zwei Luftleiteinrichtungen kann auch an einem Zentralelement des Luftverteilers angeordnet sein. Diese Ausgestaltungen sind besonders einfach und kostengünstig bei gleichzeitig hoher Effektivität umzusetzen.

Gemäß einer weiteren bevorzugten Ausführungsform ist vorgesehen, dass jede der zwei Hauptströmungsrichtungen in einer eine Längsachse des Luftkanals einschließenden vertikalen Ebene einen vertikalen Strömungswinkel von mindestens 3° und/oder maximal 65° aufweist. Diese vertikalen Strömungswinkelbereiche bewirken ein besonders vorteilhaftes Strömungsverhalten, durch welches die oben genannten Vorteile besonders stark in Erscheinung treten.

Insgesamt ergibt sich vorzugsweise in jeder der zwei Hauptströmungsrichtungen ein Strömungskegel, der eine mit den hier beschriebenen horizontalen und vertikalen Strömungswinkeln eine Ausdehnung in vertikaler Richtung und in horizontaler Richtung aufweist.

Weitere vorteilhafte Ausführungsvarianten des zuvor beschriebenen Luftverteilers ergeben sich durch Kombination einzelner, mehrerer oder aller der hier beschriebenen bevorzugten Merkmale.

Gemäß einem weiteren Aspekt der Erfindung wird die eingangs genannte Aufgabe gelöst durch ein Stallgebäude mit mindestens einem zuvor beschriebenen Luftverteiler. Vorzugsweise weist ein Stallgebäude mehrere Luftverteiler auf, die vorzugsweise gleich ausgebildet sind. Insbesondere gelten die hier beschriebenen Eigenschaften und Vorteile eines Luftverteilers auch für einzelne, mehrere oder alle der weiteren Luftverteiler in Stallgebäuden mit mehreren Luftverteilern.

Eine bevorzugte Weiterbildung des Stallgebäudes ist dadurch gekennzeichnet, dass das Stallgebäude eine Längserstreckung und eine Quererstreckung aufweist, wobei die Längserstreckung um ein Vielfaches größer ist als die Quererstreckung, und wobei der mindestens eine Luftverteiler so angeordnet ist, dass die Hauptströmungsrichtungen parallel zur Quererstreckung gerichtet sind und/oder die Blockagerichtungen parallel zur Längserstreckung gerichtet sind.

Stallgebäude haben oft einen im Wesentlichen rechteckigen Grundriss mit kurzen Giebelwänden entlang der Quererstreckung und längeren Stallwänden entlang der Längserstreckung. Ein Dachfirst des Stallgebäudes verläuft dabei oft parallel zu den Stallwänden und der Längserstreckung.

Eine weitere bevorzugte Weiterbildung des Stallgebäudes ist dadurch gekennzeichnet, dass der mindestens eine Luftverteiler so angeordnet ist, dass die Hauptströmungsrichtungen in Richtung gegenüberliegender Stallwände gerichtet sind und/oder die Blockagerichtungen in Richtung gegenüberliegender Giebelwände gerichtet sind.

Die Anordnung der Luftverteiler derart, dass die Hauptströmungsrichtungen in Richtung der Stallwände gerichtet sind und somit die Luftleiteinrichtungen die Luft in Richtung der Stallwände ausströmen lassen, ist besonders bevorzugt für eine hohe Effizienz und Effektivität der Luftverteilung und insbesondere auch um Geschwindigkeit und Reichweite des Luftstroms zu erhöhen.

Gemäß einem weiteren Aspekt der Erfindung wird die eingangs genannte Aufgabe gelöst durch ein Verfahren zum Verteilen von Luft in einem Stallgebäude, umfassend Ansaugen von Luft, insbesondere Außenluft und/oder Umluft, vorzugsweise Mischen der angesaugten Außenluft und/oder Umluft zu Luft, Umlenken der Luft aus einer vorzugsweise vertikalen in eine vorzugsweise horizontale Richtung, vorzugsweise durch eine Prallplatte, und Ausströmen der Luft beschränkt auf zwei Hauptströmungsrichtungen.

Eine bevorzugte Weiterbildung des Verfahrens ist dadurch gekennzeichnet, dass das Beschränken des Ausströmens der Luft auf zwei Hauptströmungsrichtungen durch zwei Luftleiteinrichtungen erfolgt.

Eine weitere bevorzugte Weiterbildung des Verfahrens ist dadurch gekennzeichnet, dass das Ausströmen der Luft in Richtung gegenüberliegender Stallwände und/oder parallel zu einer Quererstreckung des Stallgebäudes erfolgt.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale

Bevorzugte Ausführungsbeispiele werden beispielhaft anhand der beiliegenden Figuren beschrieben. Es zeigen:
- Figur 1:: eine dreidimensionale schematische Darstellung eines Teils eines Stallgebäudes mit einem Luftverteiler;
- Figur 2:: eine dreidimensionale schematische Darstellung eines Teils eines Luftverteilers;
- Figur 3:: einen schematischen Querschnitt durch einen Luftverteiler orthogonal zur Längsachse des Luftkanals;
- Figur 4:: einen schematischen Längsschnitt durch einen Luftverteiler entlang der Längsachse des Luftkanals; und
- Figur 5:: ein schematisches Ablaufdiagramm eines Verfahrens zum Verteilen von Luft in einem Stallgebäude.

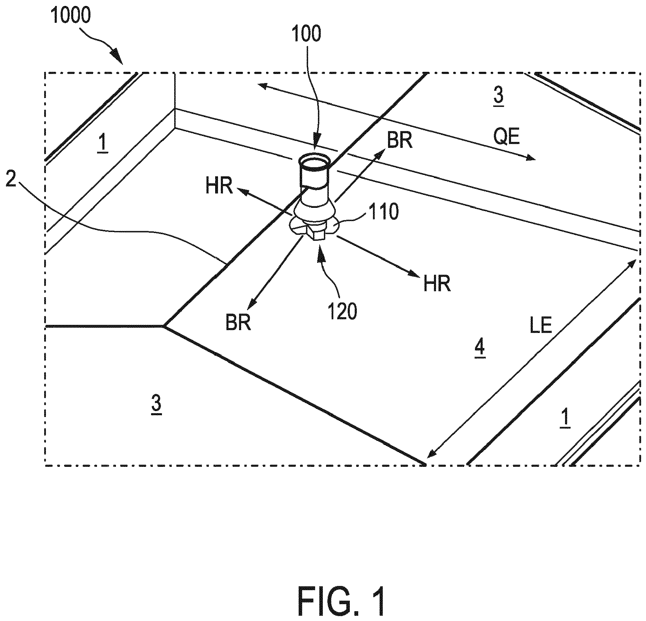

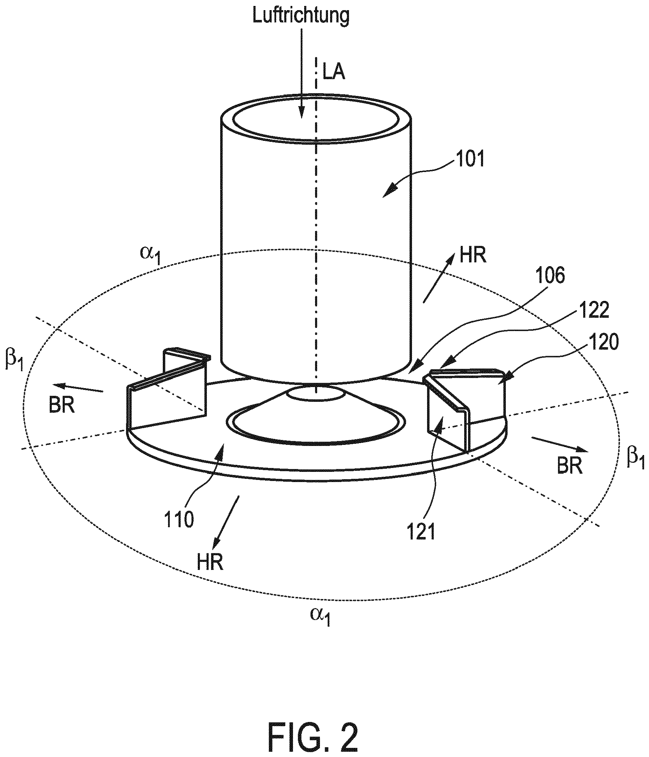

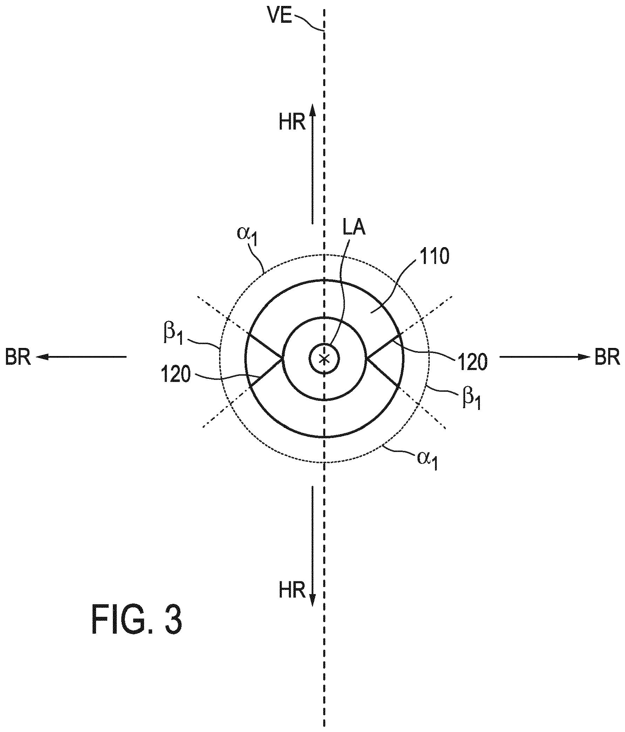

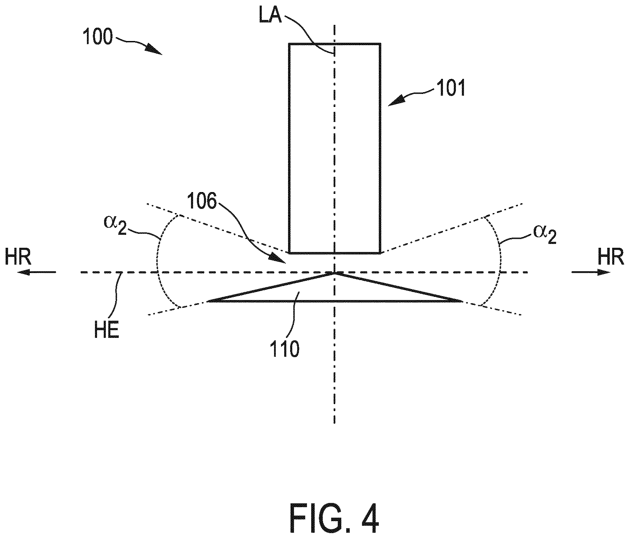

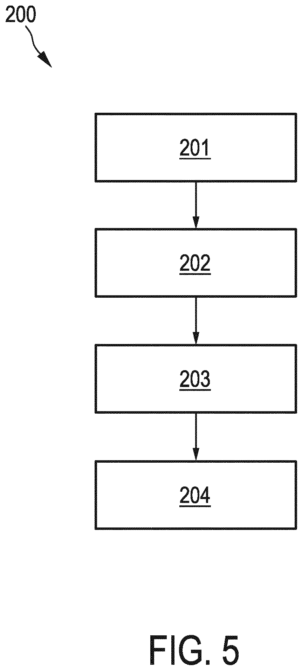

Fig. 1 zeigt eine schematische Darstellung eines Teils eines Stallgebäudes 1000 mit einem Luftverteiler 100. Fig. 2 zeigt eine dreidimensionale schematische Darstellung eines Teils eines Luftverteilers 100. Fig. 3 zeigt einen schematischen Querschnitt durch einen Luftverteiler 100 orthogonal zur Längsachse LA. Fig. 4 zeigt einen schematischen Längsschnitt durch einen Luftverteiler 100 entlang der Längsachse LA. Fig. 5 zeigt ein schematisches Ablaufdiagramm eines Verfahrens 200 zum Verteilen von Luft in einem Stallgebäude 1000.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

Fig. 1 zeigt ein Stallgebäude 1000 zur Nutztierhaltung mit einem Luftverteiler 100. Das Stallgebäude 1000 weist eine Längserstreckung LE und eine Quererstreckung QE auf. Die Längserstreckung LE ist um ein Vielfaches größer als die Quererstreckung QE, wobei in Fig. 1 nur ein Teil des gesamten Stallgebäudes 1000 abgebildet ist. Das Stallgebäude 1000 hat einen im Wesentlichen rechteckigen Grundriss mit kurzen Giebelwänden 3 entlang der Quererstreckung QE und längeren Stallwänden 1 entlang der Längserstreckung LE. Der Dachfirst 2 des Stallgebäudes 1000 verläuft parallel zu den Stallwänden 1 und der Längserstreckung LE.

In einem Stallgebäude 1000 sind in der Regel mehrere Luftverteiler 100 angeordnet, wobei in Fig. 1 nur ein Luftverteiler 100 dargestellt ist. Die hier beschriebenen Eigenschaften des Luftverteilers 100 gelten vorzugsweise ebenso für Stallgebäude 1000 mit mehreren Luftverteilern 100.

Der Luftverteiler 100 ist ausgestattet mit einem Luftkanal 101, der eine Umluftöffnung, einen Ventilator, eine Mischkammer zum Mischen von Außenluft und/oder Umluft zu Mischluft enthalten kann, einem Austrittsspalt 106 für Luft und einer Prallplatte 110 zur Umlenkung von Luft. Ferner weist Luftverteiler 100 zwei Luftleiteinrichtungen 120 im Austrittsspalt 106 auf, die angeordnet sind, das Ausströmen von Luft aus dem Austrittsspalt 106 auf zwei Hauptströmungsrichtungen HR zu beschränken.

Die Längsachse LA des Luftkanals 101 ist im Betriebszustand im Wesentlichen vertikal ausgerichtet. Der Luftkanal 101 dient der Zufuhr von Luft zur Prallplatte 110 und Austrittsspalt 106.

Der Austrittsspalt 106 wird von der Prallplatte 110 begrenzt. Die Prallplatte 110 lenkt den Luftstrom von einer im Betriebszustand vorzugsweise im Wesentlichen vertikalen Durchströmungsrichtung in eine vorzugsweise im Wesentlichen horizontalen Ausströmungsrichtung um. An der Prallplatte 110 angeordnet sind ferner zwei Luftleiteinrichtungen 120. Diese dienen dazu, das Ausströmen von Luft aus dem Austrittsspalt 106 auf zwei Hauptströmungsrichtungen HR zu beschränken. Hierdurch kann in vorteilhafter Weise die Entstehung von Wirbelströmen und/oder einer Luftwalze verhindert bzw. verringert und somit Geschwindigkeit und Reichweite des Luftstroms erhöht werden.

Die beiden Hauptströmungsrichtungen HR sind im Betriebszustand im Wesentlichen horizontal und einander gegenüberliegend ausgerichtet sowie zueinander entgegengesetzt. Ferner weist jede derzwei Hauptströmungsrichtungen HR in einer Ebene HE orthogonal zu einer Längsachse LA des Luftkanals 101 einen horizontalen Strömungswinkel α₁ von mindestens 45° und/oder maximal 135° auf.

Ferner blockieren die zwei Luftleiteinrichtungen 120 das Ausströmen von Luft in zwei Blockagerichtungen BR. Die zwei Blockagerichtungen BR sind einander gegenüberliegend und zueinander entgegengesetzt ausgerichtet. Die beiden Blockagerichtungen BR weisen in einer Ebene HE orthogonal zu einer Längsachse LA des Luftkanals 101 einen Blockagewinkel β, von mindestens 45° und/oder maximal 135° auf. In den Blockagerichtungen BR strömt im Wesentlichen keine Luft aus dem Luftverteiler 100 aus, was durch die zwei Luftleiteinrichtungen 120 verhindert wird. Diese Blockagerichtungen BR tragen somit zur Trennung der beiden Hauptströmungsrichtungen HR voneinander bei.

In einer Ebene HE orthogonal zur Längsachse LA des Luftkanals 101 sind die Hauptströmungsrichtungen HR und Blockagerichtungen BR abwechselnd angeordnet. Dies bewirkt eine besonders gute Trennung der beiden Hauptströmungsrichtungen HR voneinander.

Die beiden Luftleiteinrichtungen 120 sind als V-förmiges Leitelement ausgebildet und weisen zwei im Wesentlichen plattenförmigen Leitelemente 121 mit einer Haupterstreckung in einer im Betriebszustand vertikalen Ebene auf. Hierdurch wird ein Ausströmen in seitlicher Richtung begrenzt. Die beiden Luftleiteinrichtungen 120 weisen ferner Luftrichtfinnen 122 auf, welche sich an die im Wesentlichen plattenförmigen Leitelemente 121 anschließen und im Betriebszustand im Wesentlichen horizontal ausgerichtet sind.

Wie insbesondere in Fig. 4 zu erkennen ist, weisen die zwei Hauptströmungsrichtungen HR in einer eine Längsachse LA des Luftkanals 101 einschließenden vertikalen Ebene VE einen vertikalen Strömungswinkel α₂ von mindestens 3° und/oder maximal 65° auf.

Insgesamt ergibt sich somit in jeder der zwei Hauptströmungsrichtungen HR ein Strömungskegel, der eine mit den hier beschriebenen horizontalen und vertikalen Strömungswinkeln eine Ausdehnung in vertikaler Richtung und in horizontaler Richtung aufweist.

Der Luftverteiler 100 ist im Stallgebäude 1000 so angeordnet, dass die Hauptströmungsrichtungen HR parallel zur Quererstreckung QE gerichtet sind und die Blockagerichtungen BR parallel zur Längserstreckung LE gerichtet sind. Der Luftverteiler 100 ist im Stallgebäude 1000 so angeordnet, dass die Hauptströmungsrichtungen HR in Richtung gegenüberliegender Stallwände 1 gerichtet sind und die Blockagerichtungen BR in Richtung gegenüberliegender Giebelwände 3 gerichtet sind.

Die Anordnung von Luftverteilern 100 ist somit derart, dass die Hauptströmungsrichtungen HR in Richtung der Stallwände 1 gerichtet sind und somit die Luftleiteinrichtung 120 die Luft in Richtung der Stallwände 1 ausströmen lassen. Dies ist besonders bevorzugt für eine hohe Effizienz und Effektivität der Luftverteilung und insbesondere auch um Geschwindigkeit und Reichweite des Luftstroms zu erhöhen.

In Fig. 5 ist ein Verfahren 200 zum Verteilen von Luft in einem Stallgebäude 1000 schematisch abgebildet. In einem Schritt 201 erfolgt das Ansaugen von Luft, insbesondere Außenluft und/oder Umluft. In einem weiteren optionalen Schritt 202 erfolgt vorzugsweise das Mischen der angesaugten Außenluft und/oder Umluft zu Luft, und in Schritt 203 das Umlenken der Luft durch die Prallplatte 110. Im Schritt 204 erfolgt das Ausströmen der Luft beschränkt auf zwei Hauptströmungsrichtungen HR.

Die hier angegebene Reihenfolge von Schritten ist bevorzugt, kann aber auch, sofern praktikabel und sinnvoll, anders ablaufen. Insbesondere können einzelne, mehrere oder alle der Schritte parallel zueinander und/oder zumindest teilweise gleichzeitig und/oder zeitlich überlappend ablaufen.

### Bezugszeichenliste

- 1000: Stallgebäude
- 1: Stallwand
- 2: Dachfirst des Stallgebäudes
- 3: Giebelwand
- 4: Nutztieraufenthaltsbereich
- 100: Luftverteiler
- 101: Luftkanal
- 106: Austrittsspalt
- 110: Prallplatte
- 120: Luftleiteinrichtung
- 121: Leitelement
- 122: Luftrichtfinne
- 200: Verfahren zum Verteilen von Luft in einem Stallgebäude
- 201: Ansaugen von Außenluft und/oder Umluft
- 202: Mischen der angesaugten Außenluft und/oder Umluft zu Luft
- 203: Umlenken der Luft
- 204: das Ausströmen der Luft beschränkt auf zwei Hauptströmungsrichtungen
- HR: Hauptströmungsrichtung
- BR: Blockagerichtung
- LA: Längsachse des Luftkanals
- HE: ebene orthogonal zur Längsachse des Luftkanals, horizontale Ebene
- VE: vertikale Ebene, die Längsachse des Luftkanals einschließend
- LE: Längserstreckung des Stallgebäudes
- QE: Quererstreckung des Stallgebäudes
- α₁: horizontaler Strömungswinkel
- α₂: vertikaler Strömungswinkel
- β₁: Blockagewinkel

## Patentansprüche

1. Luftverteiler (100) für ein Stallgebäude (1000), mit einem Luftkanal (101), einem Austrittsspalt (106) für Luft und einer Prallplatte (110), **gekennzeichnet durch** zwei Luftleiteinrichtungen (120), die angeordnet sind, das Ausströmen von Luft auf zwei Hauptströmungsrichtungen (HR) zu beschränken.

2. Luftverteiler (100) nach dem vorhergehenden Anspruch,
**gekennzeichnet durch** einen Umluftzufuhrspalt und/oder eine Umluftöffnung, einen Ventilator und/oder eine Mischkammer zum Mischen von Außenluft und/oder Umluft zu Mischluft.

3. Luftverteiler (100) nach mindestens einem der vorhergehenden Ansprüche, **dadurch gekennzeichnet, dass** eine Längsachse (LA) des Luftkanals (101) im Betriebszustand im Wesentlichen vertikal ausgerichtet ist, und/oder **dadurch gekennzeichnet, dass** jede der zwei Hauptströmungsrichtungen (HR) im Betriebszustand im Wesentlichen horizontal ausgerichtet ist, und/oder
**dadurch gekennzeichnet, dass** die zwei Hauptströmungsrichtungen (HR) einander gegenüberliegend ausgerichtet sind.

4. Luftverteiler (100) nach mindestens einem der vorhergehenden Ansprüche, **dadurch gekennzeichnet, dass** jede der zwei Hauptströmungsrichtungen (HR) in einer Ebene (HE) orthogonal zu einer Längsachse (LA) des Luftkanals (101) einen horizontalen Strömungswinkel (α₁) von mindestens 45° und/oder maximal 135° aufweist.

5. Luftverteiler (100) nach mindestens einem der vorhergehenden Ansprüche, **gekennzeichnet durch** zwei Blockagerichtungen (BR), wobei die zwei Luftleiteinrichtungen das Ausströmen von Luft in den beiden Blockagerichtungen (BR) blockieren.

6. Luftverteiler (100) nach mindestens einem der vorhergehenden Ansprüche, **dadurch gekennzeichnet, dass** die zwei Blockagerichtungen (BR) einander gegenüberliegend ausgerichtet sind, und/oder
**dadurch gekennzeichnet, dass** jede der zwei Blockagerichtungen (BR) in einer Ebene (HE) orthogonal zu einer Längsachse (LA) des Luftkanals (101) einen Blockagewinkel (β₁) von mindestens 45° und/oder maximal 135° aufweist.

7. Luftverteiler (100) nach mindestens einem der vorhergehenden Ansprüche, **dadurch gekennzeichnet, dass** in einer Ebene (HE) orthogonal zu einer Längsachse (LA) des Luftkanals (101) die Hauptströmungsrichtungen (HR) und Blockagerichtungen (BR) abwechselnd angeordnet sind.

8. Luftverteiler (100) nach mindestens einem der vorhergehenden Ansprüche, **dadurch gekennzeichnet, dass** jede der zwei Luftleiteinrichtungen (120) als V-förmiges Leitelement (121) ausgebildet ist, und/oder **dadurch gekennzeichnet, dass** jede der zwei Luftleiteinrichtungen (120) im Austrittsspalt (106) angeordnet ist, und/oder
**dadurch gekennzeichnet, dass** jede der zwei Luftleiteinrichtungen (120) auf der Prallplatte (110) angeordnet ist.

9. Luftverteiler (100) nach mindestens einem der vorhergehenden Ansprüche, **dadurch gekennzeichnet, dass** jede der zwei Hauptströmungsrichtungen (HR) in einer eine Längsachse (LA) des Luftkanals (101) einschließenden vertikalen Ebene (VE) einen vertikalen Strömungswinkel (α₂) von mindestens 3° und/oder maximal 65° aufweist.

10. Luftverteiler (100) nach mindestens einem der vorhergehenden Ansprüche, **dadurch gekennzeichnet, dass** der Ventilator ausgebildet ist, Außenluft durch den Luftkanal (101) anzusaugen und/oder Umluft durch den Umluftzufuhrspalt anzusaugen und/oder Luft aus dem Austrittsspalt (106) ausströmen zu lassen.

11. Stallgebäude (1000) mit mindestens einem Luftverteiler (100) nach mindestens einem der vorhergehenden Ansprüche.

12. Stallgebäude (1000) nach dem vorhergehenden Anspruch,
**dadurch gekennzeichnet, dass** das Stallgebäude (1000) eine Längserstreckung (LE) und eine Quererstreckung (QE) aufweist, wobei die Längserstreckung (LE) um ein Vielfaches größer ist als die Quererstreckung (QE), und wobei der mindestens eine Luftverteiler (100) so angeordnet ist, dass die Hauptströmungsrichtungen (HR) parallel zur Quererstreckung (QE) gerichtet sind und/oder die Blockagerichtungen (BR) parallel zur Längserstreckung (LE) gerichtet sind, und/oder **dadurch gekennzeichnet, dass** der mindestens eine Luftverteiler (100) so angeordnet ist, dass die Hauptströmungsrichtungen (HR) in Richtung gegenüberliegender Stallwände (1) gerichtet sind und/oder die Blockagerichtungen (BR) in Richtung gegenüberliegender Giebelwände (3) gerichtet sind.

13. Verfahren (200) zum Verteilen von Luft in einem Stallgebäude (1000), umfassend
- Ansaugen (201) von Luft, insbesondere Außenluft und/oder Umluft,
- vorzugsweise Mischen (202) der angesaugten Außenluft und/oder Umluft zu Luft,
- Umlenken (203) der Luft aus einer vorzugsweise vertikalen in eine vorzugsweise horizontale Richtung, vorzugsweise durch eine Prallplatte (110),
- Ausströmen (204) der Luft beschränkt auf zwei Hauptströmungsrichtungen (HR).

14. Verfahren nach dem vorhergehenden Anspruch,
**dadurch gekennzeichnet, dass**
- das Beschränken des Ausströmens der Luft auf zwei Hauptströmungsrichtungen (HR) durch zwei Luftleiteinrichtungen (120) erfolgt, und/oder
- das Ausströmen der Luft in Richtung gegenüberliegender Stallwände (1) und/oder parallel zu einer Quererstreckung (QE) des Stallgebäudes (1000) erfolgt.
